# EUROPEAN PATENT SPECIFICATION

(11) **EP 1 780 047 B1**
(45) Date of publication and mention of the grant of the patent: **29.04.2009**
(21) Application number: 05110055.0
(22) Date of filing: 27.10.2005
(51) Int. Cl.: B44D 3/12, B65D 25/14, B65D 81/18, B65D 1/12, B29C 35/08, B29C 59/08, B29C 59/10, B29C 59/14, B29C 59/16

(54) **Method of forming a package component, and such components**
Verfahren zur Herstellung einer Komponente einer Verpackung sowie dergestalte Komponenten
Procédé de fabrication d'un composant d'un paquet, et composants ainsi produit

(43) Date of publication of application: 02.05.2007
(73) Proprietor: Emballator Lagan Plast Aktiebolag, 341 91 Ljungby (SE)
(72) Inventor: Arvidsson, Thomas, 341 35 Ljungby (SE); Berta, Josef, 341 71 Ljungby (SE); Johansson, Richard, 341 39 Ljungby (SE)
(74) Representative: Hjalmarsson, Magnus Axel

(56) References cited:
- EP-A- 0 551 819
- WO-A-00/27725
- WO-A-01/32442
- WO-A-02/094582
- DE-A1- 4 126 964
- DE-C1- 19 715 382

## Description

### Field of the invention

The present invention relates to a method of forming a component for a package for storing wet paint, the component being adapted for securing paint that has dried thereon and preventing the dried paint from falling into the wet paint.

The present invention further relates to a component for a package for storing wet paint, the component being adapted for securing paint that has dried thereon and preventing the dried paint from falling into the wet paint.

### Background art

A package for wet paint usually comprises at least two components, namely a container, which is often formed as a bucket, and a lid for sealing the container when storing the wet paint. It is often preferred to manufacture the container and the lid of a thermoplastic material, such as polyethylene or polypropylene. The thermoplastic material may, for example, be extruded or injection moulded to provide the component with the desired shape.

When a container and a lid made of a thermoplastic material is used to store paint, the paint will cover most of the interior surface of the container, including parts of the lid. A problem with the use of such components for storing wet paint is that once the package has been opened and the paint has been exposed to ambient air for a while, for example while a person is applying the paint, the paint tends dry quickly on the inner walls of the container and on the inner side of the lid. Later on this dried paint peels off as paint chips that fall down into the remaining wet paint and deteriorates its quality. It is thus desired to secure the dried paint onto the inner walls of the container and onto the inner side of the lid to avoid that chips of dry paint falls down into the wet paint.

WO 02/094582 A1 by Superfos Packaging A/S discloses a container which has a coating comprising isocyanate reacted with water. A problem associated with such a container is that isocyanate is an unhealthy substance that may impose severe health risks to workers involved in the container manufacturing process. To avoid these health risks a structured surface may be formed on the inner wall of the container instead of the iscyanate coating. One such container has just been launched by Superfos Packaging A/S under the brand name FlakeFree. This container comprises a surface structure with small ridges and valleys embossed into the thermoplastic material of the inner wall of the container. The surface structure retains to some extent the dried colour on the inner wall of the container but may deteriorate the printing quality of a decoration print at the outside of the container. The amount of paint that is retained and dried at the inner wall of the container is increased, thus increasing the loss of paint. A further problem of the surface structure emerges when mixing paint. Paint of a certain colour is often formed by adding a small amount of a colour pigment at a paint surface of a container full of white coloured paint. The pigment and the paint is mixed by shaking the container, having the lid placed thereon. A surface structure at the upper regions of the container and, in particular, at the inner surface of the lid, may capture some of the pigment when starting the shaking, thereby causing an incorrect colour of the final paint.

WO 01/32442 A1 discloses a plastics container with a coating applied in order to minimise contamination of paint due to paint skinning. The coating preferably comprises a mixable two part epoxy resin, which can be cured e.g. by exposure to UV radiation. The coating is said to have at least a partial affinity for both the plastics material and said paint.

DE 197 15 382 C1 discloses a radiation curable plastics material intended for coating. The substrates to be coated with said material are made of wood, of wooden materials, like veneer and plywood, of paper or of cardboard, i.e. substrates likely to secure paint even without an extra coating.

### Summary of the invention

It is an object of the present invention to provide a method of forming a component, in particular a container or a lid, for a package, which component is effective in securing dry paint without increasing the loss of paint or causing health risks during the manufacturing thereof or showing but a partial affinity for both plastics material and dried paint.

This object is achieved by means of a method according to the preamble and comprising the steps of:
forming an element from a thermoplastic material, the element being adapted to form at least a part of the component and having a surface adapted to face the wet paint,
treating said surface to increase its surface energy by means of corona, flame or plasma treatment,
applying a radiation-curable lacquer, which is chosen among free radical UV-curable lacquers, cationic UV-curable lacquers and EB-curable lacquers, onto at least a portion of said surface, and
exposing the radiation-curable lacquer to radiation to cure the radiation-curable lacquer to form on said surface a coating which is suitable for securing dried paint thereon.

An advantage of this method is that it includes the use of free radical or cationic UV-curable lacquers or EB-curable lacquers which provide low health risks, efficient securing of dried paint, resistance to the moist environment inside a package containing wet water-based paint, and a low loss of paint. Thus a container or a lid may be provided with efficient means for avoiding contamination of the wet paint by chips of dried paint at a low cost.

A further object of the present invention is to provide a component, in particular a container or a lid, for a package, which component is effective in securing dry paint without causing health risks during the manufacturing or use thereof.

This object is achieved by a component according to the preamble and characterised by said component comprising a substrate of thermoplastic material and a surface being adapted for facing the wet paint, said surface being at least partly covered by a coating formed by a radiation-cured radiation-curable lacquer, which is chosen among the free radical UV-curable lacquers, cationic UV-curable lacquers and EB-curable lacquers.

According to one preferred embodiment an element in the form of a thin film is first provided. One surface of the thin film is treated to increase its surface energy and then the radiation-curable lacquer is applied and cured by exposing it to radiation in the form of UV-light or an electron beam. The thin film is then used as a label to form a part of the component. For instance the label could be introduced into a mould, as will be described below, or could be attached by means of an adhesive. An advantage of applying the radiation-curable lacquer to a thin film to form a label, which is then incorporated with said component, is that it is easier to control the quality of the coating of the cured radiation-curable lacquer when it is formed on a film surface and prior to being applied to the component.

Yet another object of the present invention is to provide a component which is effective in securing dry paint and which can be manufactured in an efficient way.

This object is achieved by a component for a package for storing wet paint, the component being adapted for securing paint that has dried thereon and preventing the dried paint from falling into the wet paint, the component being characterised in comprising a label being attached to a wall of the component, which wall is adapted to face the wet paint, the label comprising a thin thermoplastic film and a coating formed on a surface of the thin film, said surface being adapted for facing the wet paint, the coating being suitable for securing dried paint thereon. An advantage of this component is that the label could be easily adapted to have the desired properties as regards the adhesion of the dried paint of the paint type in question and that the label may be effectively attached to said wall of the component in order to secure paint that has dried thereon. Thus it is not necessary to change the type of bucket or lid used when the type of wet paint is changed, it is sufficient to change the type of label that is attached to a wall, facing the wet paint, of the bucket or lid.

Additional aspects and advantages of the present invention will become apparent from the dependent claims and the following description describing preferred embodiments of the invention.

### Brief description of the drawings

Fig 1 is a cross section and shows a bucket-shaped container after it has been formed by injection moulding.
Fig. 2 is a cross section and shows the application of a UV-curable lacquer.
Fig. 3a is a cross section and shows curing of the UV-curable lacquer.
Fig. 3b is a cross section and shows curing of UV-curable lacquer according to an alternative embodiment.
Fig. 4 is a cross section and shows a container filled with wet paint.
Fig. 5 is an enlargement of the area V shown in Fig. 4.
Fig. 6 is a cross section and shows a thin film with a coating of UV-cured lacquer.
Fig. 7 is a cross section and shows a mould into which the thin film has been placed.
Fig. 8 is a cross section and shows a lid having the thin film incorporated therein.
Fig. 9 is a cross section and shows a thin film according to an alternative embodiment.

### Description of preferred embodiments

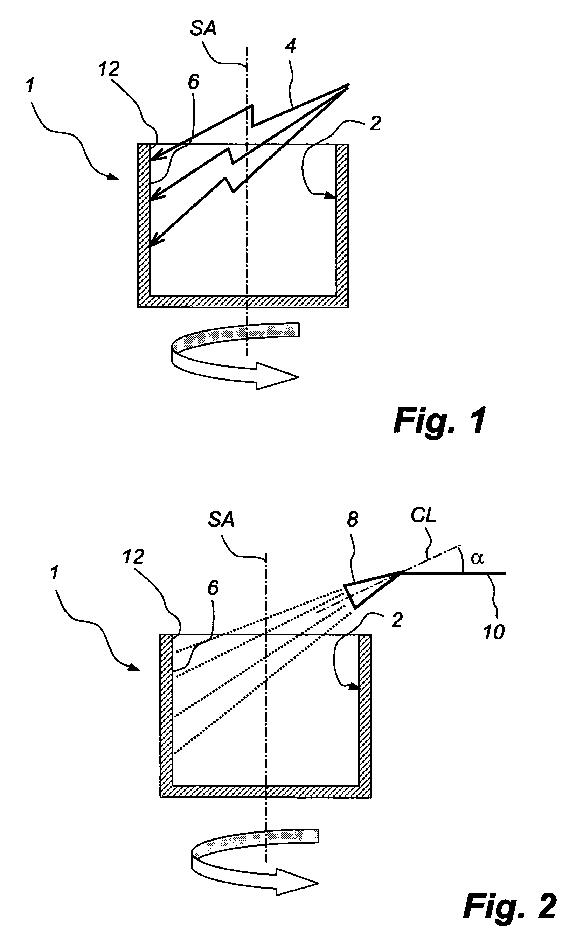

Fig 1. illustrates a first package component in the form of a bucket-shaped container 1. The container 1 has been produced by injection moulding of a thermoplastic material. Suitable materials are polyethylene, polypropylene and the like. Such materials are inexpensive compared to e.g. sheet metal.

The container 1 comprises an element in the form of an inner wall 2 forming part of the container 1. In order to provide the container 1 with means for avoiding that any dried paint peels off from the inner wall 2 and mixes with the wet paint the inner wall 2 is, in a first step, exposed to a corona treatment, schematically illustrated by means of flashes 4. The corona treatment is made to increase the surface energy of a surface 6 of the inner wall 2, the surface 6 being adapted for facing wet paint. The corona treatment is preferably made until the surface energy, measured in accordance with ASTM Std. D-2578, is at least 38 mN/m (Dynes/cm), preferably at least 50 mN/m (Dynes/cm). As alternative to corona treatment the surface energy could be increased by means of flame or plasma treatment or another method that is per se known in the art. The container 1 is rotated around its symmetry axis SA such that the corona treatment will reach all those parts of surface 6 of the inner wall 2 which are to become coated.

Fig. 2 illustrates a second step, namely the application of a radiation-curable lacquer in the form of a UV-curable lacquer onto the surface 6 of the inner wall 2. The application is made by means of a spray nozzle 8. A pipe 10 supplies the spray nozzle 8 with wet UV-curable lacquer from a not shown storage of UV-curable lacquer. The spray nozzle 8 is located above an opening 12 of the container 1 and at a distance from the symmetry axis SA of the container 1. The centreline CL of the spray nozzle 8 is inclined an angle α of about 40° to the horizontal plane. During the application of the UV-curable lacquer the container 1 rotates around its symmetry axis SA and thus the spray nozzle 8 manages to apply an even layer of UV-curable lacquer on the entire surface 6 of the inner wall 2. It is also possible, as alternative to rotating the container 1, to rotate the spray nozzle 8 around the axis SA in order to apply an even layer of the lacquer on the surface 6. A still further alternative, which is preferably combined with rotating the container 1 or the spray nozzle as described above, is to lower the spray nozzle into the opening of the container during the application of the lacquer.

As alternative to applying the UV-curable lacquer by means of a spray nozzle the lacquer may be applied by means of a paint roller, a brush or by means of any of the techniques that are known, from other applications, for applying a thin layer of lacquer on a thermoplastic surface. These known printing methods include offset printing, pad printing, screen printing, flexo printing, tampo printing and inkjet printing.

The radiation-curable lacquer mentioned above is chosen among cationic UV-curable lacquers, free radical UV-curable lacquers and EB-curable lacquers. All three types of lacquers are known in the art from other applications. In the example described with reference to Fig. 1-9 the non-limiting example is a UV-curable lacquer, i.e. a cationic UV-curable lacquer or a free radical UV-curable lacquer.

In short a cationic UV-curable lacquer is based on an ultra violet (UV) light induced decomposition of a photoinitiator, which generates a positively charged fragment, which could be called a "cation." This cation can take the form of an electron-deficient species such as a Lewis acid. The electron-deficient or cationic intermediates will react rapidly with monomers to provide a cationic polymerisation. The reactive groups in cationic UV-curable lacquers are typically epoxy or hydroxy groups. For example a cationic UV-curable lacquer may contain a photoinitiator, for example of the type aryl sulphonium hexafluorophosphate-salts which, when exposed to light of the wave-length 255 nm, is decomposed to form a cation. The cationic UV-curable lacquer further contains a binding agent, which is preferably present in the form of cyclo-aliphatic epoxies. The cationic UV-curable lacquer may also contain modifiers of the type hydroxy- and vinyl ether containing substances adapted for modifying the UV-curing process, the flexibility and the adhesion of the cationic UV-curable lacquer. An example of a useful cationic UV-curable lacquer is UVC00101 which is available from XSYS Print Solutions (formerly ANI Printing Inks AB), Trelleborg, Sweden.

A free radical UV-curable lacquer depends on the UV-light induced decomposition of photoinitiators that generate fragments that contain an unpaired electron, i.e. a free radical. The unpaired electron species react with unsaturated monomers to provide free radical polymerization. The reactive groups in a free radical UV-curable lacquer are typically acrylates and/or vinyl ethers. For example a free radical UV-curable lacquer may contain a photoinitiator such as benzophenone which, when exposed to light of the wave-length 255 nm, is decomposed to form free radicals. The free radical UV-curable lacquer further contains a binding agent, which preferably comprises monomers, such as TPGDA, for the purpose of providing the lacquer with the correct viscosity, and oligomers, for example urethane acrylates, polyester acrylates, polyether acrylates, which may be cross-linked by the free radicals. Examples of useful free radical UV-curable lacquers are UVF00081 and UVF00108 which are available from XSYS Print Solutions (formerly ANI Printing Inks AB), Trelleborg, Sweden.

An EB-curable lacquer depends on an electron beam (EB) by which electrons are ejected towards the lacquer. In principle the composition of an EB-curable lacquer is rather similar to that of the free radical UV-curable lacquers, with the difference that an EB-curable lacquer need not contain a photoinitiator since the polymerisation of the lacquer is initiated by the electrons from the electron beam. Thus the EB-curable lacquer contains as main ingredients monomers and oligomers.

Optionally the lacquer, of any of the types described above, might comprise a delustering agent that further improves the capability of the cured lacquer to secure the dried paint and avoid that chips of dried paint fall down into the wet paint. An example of such a substance is particles, for instance in the form of amorphous silica (SiO₂) which could be mixed with the lacquer as a delustering agent to provide a delustered finish to the cured lacquer providing a further improved securing of the dried paint. The particle size of the amorphous silica could typically be 2-10 µm. The free radical UV-curable lacquer UVF00108, which is mentioned above, contains amorphous silica with a particle size of 5 µm.

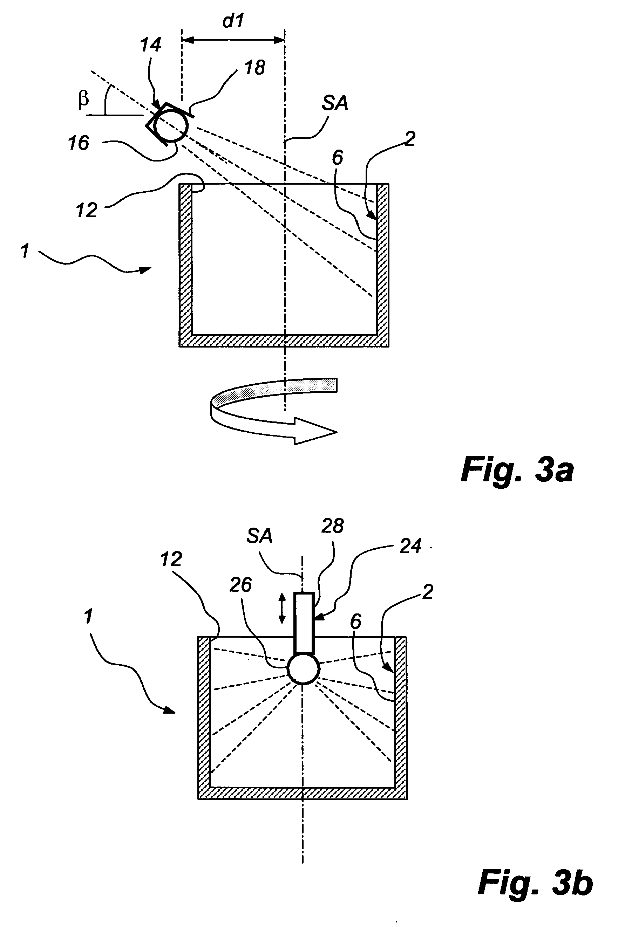

Fig. 3a illustrates a first embodiment of a third step, namely the curing of the UV-curable lacquer. The container 1 is again rotated around its symmetry axis SA. A radiation source in the form of an UV-lamp 14 having a light-bulb 16 and a reflector 18 is located at a level above the opening 12 of the container 1. Further the light-bulb 16 is located at a distance d1 from the symmetry axis SA of the container 1. The UV-lamp 14 is inclined an angle β of about 40° to the horizontal plane. By this positioning of the UV-lamp 14 and through the rotation of the container 1 the UV-lamp 14 may properly illuminate and cure, in an even manner, the lacquer at the surface 6 of the inner wall 2.

The wave length of the radiation in the form of UV-light and the time of illuminating the surface 6 of the inner wall 2 is determined by the type of lacquer and the thickness of the layer applied on the surface 6. Typically the preferred wave length is in the range 230 to 340 nm. Typically the time of illumination is 1-10 seconds.

Fig. 3b illustrates an alternative embodiment of how to obtain a good curing of the UV-curable lacquer. In this embodiment a UV-lamp 24 comprises a light-bulb 26 which is fixed to a lamp-holder 28. As shown in Fig. 3b the UV-lamp 24 is reflector-free. Thus UV-light can spread in almost all directions from the light-bulb 26. The UV-lamp 24, could, however, as alternative have a small reflector reflecting any light that is emitted upwards. The UV-lamp 24 is movable in the horizontal direction, as indicated by an arrow. Thus the UV-lamp 24 can be lowered, along the symmetry axis SA of the container 1, into the opening 12 of the container 1 such that the light-bulb 26 will be located at a level below the level of the opening 12 and actually inside the container 1. Since the light-bulb 26 emits UV-light in all directions the lacquer on the surface 6 of the inner wall 2 will be cured in an even way and in short time, since the entire inner wall 2 is illuminated simultaneously and with an almost even intensity over the surface 6 of the inner wall 2.

It will be appreciated that the container could be rotated around its symmetry axis SA also in the embodiment shown in Fig. 3b to account for any irregularities in the intensity of the UV-light emitted from the light-bulb 26.

Further it is also possible to have the UV-lamp fixed and instead raise the container 1 such that the light-bulb locates inside the container 1.

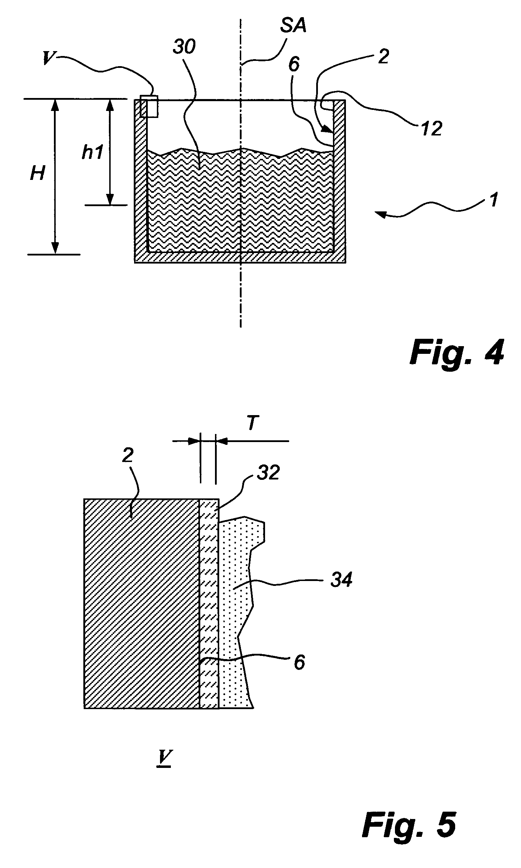

After the curing of the UV-curable lacquer the container 1 is ready for being filled with wet paint. Fig. 4 illustrates the container after some of the wet paint 30 has been used for painting. As shown in Fig. 4 the container 1 is no longer filled with wet paint, but contains only about 2/3 of the original amount of wet paint. During the painting work the paint has dried on those portions of the surface 6 of the inner wall 2 that have been exposed to ambient air. This is described in more detail below with reference to Fig. 5.

It is not always necessary to cover the entire height of the inner wall 2 with the UV-curable lacquer since the last ca 35% of the wet paint is often used in one, final occasion. Thus the UV-curable lacquer should extend over a vertical distance h1 starting from the opening 12 and extending downwards, as shown in Fig. 4. The height h1 is preferably at least 65% of the total height H of the container 1, as shown in Fig. 4. Preferably the height h1 is not more than about 85% of the total height H in order to save some lacquer in the manufacturing process. It will be appreciated that there are no technical problems with having the lacquer extending over the entire height H but it increases the consumption of the lacquer without necessarily providing extra benefits for the end user of the container.

Fig. 5 shows an enlargement of the area V shown in Figure 4. As shown in Fig. 5 the surface 6 of the inner wall 2 is coated by a coating 32 of the UV-curable lacquer. The thickness T of the coating 32, i.e. the cured UV-curable lacquer, is preferably 1-50 µm, more preferably 4-20 µm. A thickness of less than about 1 µm is not enough for forming a coating with sufficient physical strength. A thickness of more than about 50 µm results in a coating which is so thick that there is a risk that the coating itself might crack, due to the movement of the flexible inner wall 2, and fall into the wet paint together with any paint that has dried thereon. As shown in Fig. 5 a layer of paint 34 has dried on the coating 32 of the UV-curable lacquer. Thanks to the coating 32 of the cured UV-curable lacquer the layer of paint 34 cannot fall down into the remaining wet paint 30 but is secured on the coating 32.

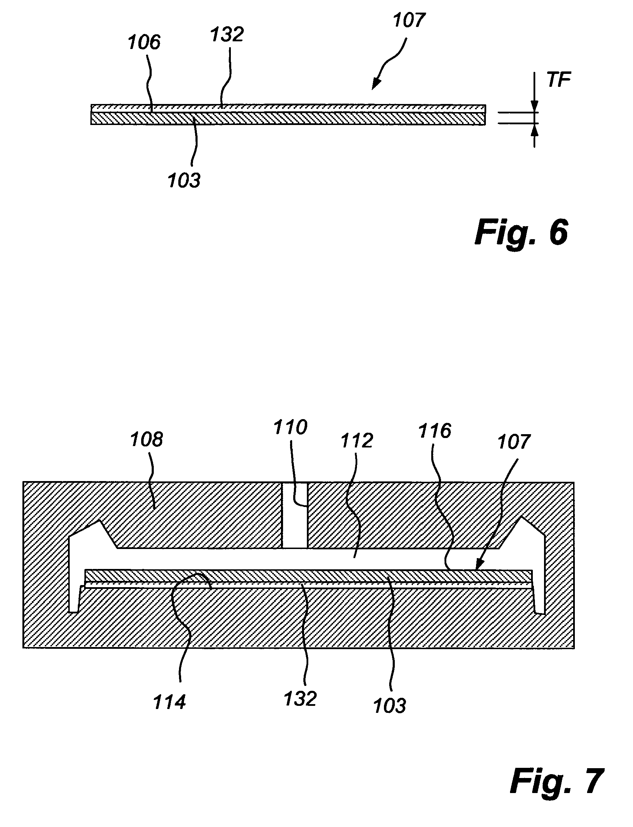

Fig. 6 illustrates a second embodiment of providing a component for a packing with means for avoiding that any dried paint peels off and mixes with the wet paint. An element in the form of a thin film 103 is first provided. The thin film 103 is made from a thermoplastic material, such as polypropylene (PP) or polyethylene (PE). One example of a useful thin film is EUH 75, which is available from Treofan Germany GmbH & Co. KG, Raunheim, DE. The thickness TF of the film is typically 50 µm to 150 µm. A first surface 106 of the thin film 103 has been subjected to a corona treatment, similar to that described with reference to Fig. 1, in order to increase the surface energy. Then a UV-curable lacquer has been applied to the surface 106 by means of, e.g., spray application, pad printing, offset, flexo printing or another suitable technique. The UV-curable lacquer is a cationic UV-curable lacquer or a free radical UV-curable lacquer. Finally the UV-curable lacquer has been cured by means of UV-light to provide a cured coating 132 on the surface 106. The thin film 103 and the coating 132 form together a label 107.

Fig. 7 shows how the label 107 comprising the thin film 103 and the coating 132 has been placed in a mould 108. The mould 108 comprises a material feed pipe 110, through which molten polymer material may be extruded, and a space 112 which has the shape of the product that is supposed to be formed. As can be seen in Fig. 7 the thin film 103 has been placed in the space 112 with the coating 132 of the UV-cured lacquer facing a lower wall 114 of the mould 108. A molten polymer is then injected into the open space 112 via the feed pipe 110. Preferably the molten polymer injected is the same type as that one of which the thin film 103 is made. As the molten polymer is injected into the space 112 it will join with the thin film 103 at a second surface 116 thereof.

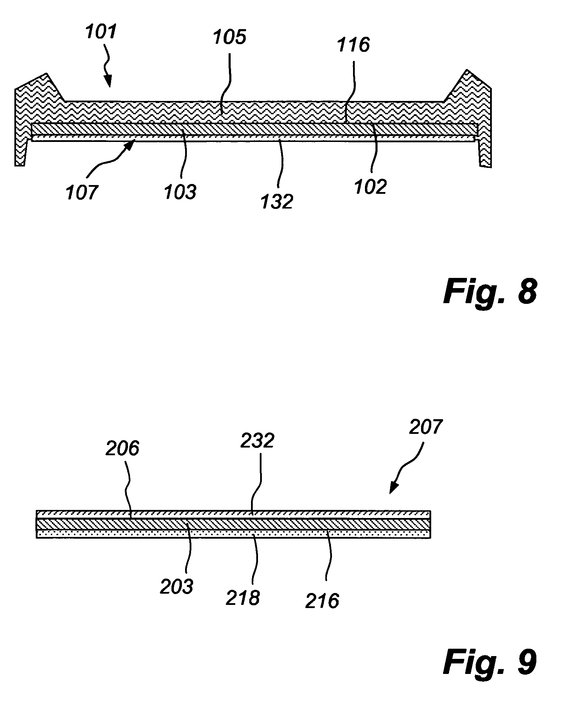

Fig. 8 shows the ready package component, which is in the form of a lid 101. The lid 101 comprises a substrate in the form of a main body 105, made from the injected polymer, e.g. PP, and the element in the form of the thin film 103 being attached to the main body 105. A lower wall 102 of the main body 105, which lower wall 102 is intended to face the wet paint when the lid 101 is used for covering a container, thus has the thin film 103 fixed thereto. When wet paint gets into contact with the lid 101 it will come into contact with the coating 132 formed of the cured UV-curable lacquer. When the lid 101 is removed from the container any wet paint attached to it will dry. However, thanks to the coating 132, this dry paint will be secured to the lid 101 and will not fall down into the wet paint when the lid 101 is put back on the container.

It will be appreciated that although the technique of using a thin film on which a coating of a UV-cured lacquer is formed is described with reference to a lid it is also possible to use this technique for forming a bucket-shaped container. In such a case the thin film, with the coating cured thereon, is wrapped around a core onto which the bucket-shaped container is to be formed. A further alternative is to provide the thin film with an adhesive such that the thin film may be fastened inside a bucket-shaped container.

Fig. 9 shows a still further alternative embodiment. In this embodiment a thin film 203 is provided on a second surface 216 with an adhesive layer 218. A coating 232 of a UV-curable lacquer is applied to a first surface 206 of the thin film 203 in accordance with what is described above. The thin film 203, the adhesive layer 218 and the coating 232 form together a label 207. The label 207 may be attached to an inner wall of a component, such as a container or a lid, for a package by means of the adhesive layer 218 to provide the component with means, i.e. the coating 232, for securing dried paint.

It will be appreciated that numerous variants of the above described embodiments are possible within the scope of the invention.

For example the description above indicates that the component for a package for storing wet paint could be a bucket-shaped container 1 or a lid 101. It will be appreciated that the component could also be some other type of container, a stirring device adapted for stirring wet paint or another object that comes into contact with wet paint, that should not easily fall off said object after it has dried.

Although the description above indicates the use of a UV-curable lacquer and UV-light for curing it is also possible to instead apply an EB-curable lacquer which is cured by means of an electron beam in a similar manner as has been described above. The thickness of the cured EB-curable lacquer is preferably in the same range as described above for UV-curable lacquers.

Above it is described that a coating of a radiation-curable lacquer is formed on a thin film 103, 203. The thin film with the coating, being cured, is then attached to a thermoplastic substrate to form a component, such as a container or a lid. It is also possible to first attach a thin film to a thermoplastic substrate and to then apply and cure a radiation-curable lacquer on the thin film, when already attached to the thermoplastic substrate. While it is usually preferred to cure the lacquer on the film prior to the attachment, which is what is described with reference to Figs. 6-9, it is thus also possible to perform the steps in another order.

### Example 1

A bucket-shaped container is formed from polypropylene. The container has a diameter of about 290 mm and a total volume of about 11 litres. The inner wall of the container is subjected to a corona treatment to increase the surface energy to slightly more than 38 mN/m (Dynes/cm). A UV-curable lacquer of the type UVF00108 available from XSYS Print Solutions, Trelleborg, Sweden, is applied by means of flexo printing to a thickness of 6 µm. The container is then placed in a UV-oven and placed adjacent to a UV-tube light. The UV-tube light is placed at a distance from the symmetry axis of the container, as shown in Fig. 3a, and the container is rotated during treatment. The UV-tube light is a Mercury H bulb which provides emission maximums at the wave lengths 250, 255, 260, 300, 310 and 360 nm. The curing continues for 3 seconds. The ready-made container is then tested for its capability to secure paint that dries on the inner walls. The paint is a water-based acrylic paint of the type "Lady Våtrum Halvblank 20", which is available from Jotun A/S, Sandefjord, NO. The dried paint adheres well to the inner wall and thus is well secured to the inner wall and does not fall off.

### Example 2

A thin film of the type EUH 75, which is available from Treofan Germany GmbH & Co. KG, Raunheim, DE, is used as a starting material. The surface of the thin film is subjected to a corona treatment to increase its surface energy. To said surface a layer of the UV-curable lacquer UVF00108, the same type as in Example 1, is applied by means of flexo printing to a thickness of 6 µm. The lacquer is then cured by means of a UV-tube light, providing light of the wave lengths described in Example 1, during 1 second to form a coating. The film and the coating provided thereon thereby forms a label which is then placed in a mould with the coating facing away from the open space of the mould. Polypropylene is then injected to form a lid with a diameter of about 290 mm. The lid is attached to the container mentioned in example 1 with said coating facing the wet paint and is used for storing wet paint. The lid is removed and the wet paint that is attached to the coating is allowed to dry. The dried paint adheres well to the coating and is thus well secured to the coating and does not fall off when the lid is put back on the container.

### Example 3

A thin film of the type EUH 75, which is available from Treofan Germany GmbH & Co. KG, Raunheim, DE, is used as a starting material. The surface of the thin film is subjected to a corona treatment to increase its surface energy. To said surface a layer of the lacquer HMA00115, which is available from XSYS Print Solutions, Trelleborg, Sweden is applied by means of flexo printing to a thickness of about 6 µm. The lacquer, which is a water-based lacquer, is then cured by means of hot air at about 50°C during 1 second. The film and the coating provided thereon thereby forms a label. At a second surface of the thin film, the second surface being opposite to said surface, an adhesive is applied to form an adhesive layer. The label is then attached to a lid with a diameter of about 290 mm by means of the adhesive layer. The lid is attached to a container with said coating facing the wet paint and is used for storing wet paint. The lid is removed and the wet paint that is attached to the coating is allowed to dry. The dried paint adheres well to the coating and is thus well secured to the coating and does not fall off when the lid is put back on the container.

## Claims

1. A method of forming a component for a package for storing wet paint, the component being adapted for securing paint that has dried thereon and preventing the dried paint from falling into the wet paint,
comprising the steps of:
forming an element (2; 103) from a thermoplastic material, the element (2; 103) being adapted to form at least a part of the component (1; 101) and having a surface (6; 106) adapted to face the wet paint,
treating said surface (6; 106) to increase its surface energy by means of corona, flame or plasma treatment,
applying a radiation-curable lacquer, which is chosen among free radical UV-curable lacquers, cationic UV-curable lacquers, and EB-curable lacquers, onto at least a portion of said surface (6; 106), and
exposing the radiation-curable lacquer to radiation to cure the radiation-curable lacquer to form on said surface (6; 106) a coating (32; 132) which is suitable for securing dried paint (34) thereon.

2. A method according to claim 1, wherein the radiation-curable lacquer is applied to said surface (6; 106) by means of a process chosen among: offset printing, pad printing, screen printing, flexo printing, inkjet printing, tampo printing, painting by means of a roller or a brush and spray application.

3. A method according to any one of claims 1-2, wherein said element is a thin film (103), which, after the radiation-curable lacquer has been applied to said surface (106) and cured to form said coating (132) on said surface (106), is attached to a thermoplastic substrate (105) to form said component (101).

4. A method according to any one of claims 1-3, wherein said element is a thin thermoplastic film (103), which, after the radiation-curable lacquer has been applied to said surface (106) and cured to form said coating (132) on said surface (106), is introduced into a mould (108), and wherein molten thermoplastic material is injected into the mould (108) at a second surface (116) of the thin film (103), said second surface (116) being opposite to said surface (106) having said coating (132), to form said component (101).

5. A method according to claim 3, wherein said element is a thin thermoplastic film (203) which is provided with an adhesive layer (218) on a second.surface (216), said second surface (216) being opposite to said surface (206) having said coating (232), for attaching the thin film (203) to the thermoplastic substrate.

6. A method according to any one of claims 1-5, wherein the said component is a bucket-shaped container (1), curing the radiation-curable lacquer at an inner wall (2) of the container (1) being accomplished by rotating the bucket-shaped container (1) around its symmetry axis (SA) while keeping a radiation source (14) inclined to the horizontal plane.

7. A method according to any one of claims 1-5, wherein said component is a bucket-shaped container (1), curing the radiation-curable lacquer at an inner wall (2) of the container (1) being accomplished by locating a radiation source (24) at least partly in the interior of the bucket-shaped container (1).

8. A method according to any one of claims 1-7, wherein said step of treating said surface (6; 106) to increase its surface energy is performed until the surface energy is at least 38 mN/m (Dynes/cm), preferably by a method chosen among corona treatment, plasma treatment and flame treatment.

9. A component for a package for storing wet paint, the component (1; 101) being adapted for securing paint that has dried thereon and preventing the dried paint (34) from falling into the wet paint (30),
**characterised by** said component (1; 101) comprising a substrate (2; 105) of thermoplastic material and a surface (6; 106) being adapted for facing the wet paint (30) and being treated by means of corona, flame or plasma treatment, said surface (6; 106) being at least partly covered by a coating (32; 132) formed by a radiation-cured radiation-curable lacquer, which is chosen among the free radical UV-curable lacquers, cationic UV-curable lacquers, and EB-curable lacquers.

10. A component according to claim 9, wherein said surface (106) is formed on a thin film (103) being attached to said substrate (105) of thermoplastic material.

11. A component according to any one of claims 9-10, wherein said coating (32; 132) has a thickness of 1-50 µm.

12. A component according to any one of claims 9-11, wherein said component is a bucket-shaped container (1), said coating covering an inner wall (2) of the container (1) from an opening (12) of the container (1) and down to at least 65% of the total height (H) of the inner wall (2) .

13. A component for a package for storing wet paint, the component (1; 101) being adapted for securing paint that has dried thereon and preventing the dried paint (34) from falling into the wet paint (30),
**characterised in** the component comprising a label (107; 207) being attached to a wall (102) of the component (1; 101), which wall (102) is adapted to face the wet paint (30), the label (107, 207) comprising a thin thermoplastic film (103; 203) and a coating (132; 232) formed on a surface (106; 206) of the thin film (103; 203), said surface (106; 206) being adapted for facing the wet paint (30) and being treated by means of corona, flame or plasma treatment, the coating (132; 232) being suitable for securing dried paint (34) thereon.

14. A component according to claim 13, the component being chosen among bucket-shaped containers (1) and lids (101).

## Patentansprüche

1. Verfahren zum Herstellen einer Komponente für eine Verpackung zum Aufbewahren von flüssiger Farbe, wobei die Komponente dafür geeignet ist, Farbe festzuhalten, die darauf getrocknet ist, und zu verhindern, dass die getrocknete Farbe in die nasse Farbe hineinfällt,
wobei das Verfahren folgende Schritte umfasst:
Bilden eines Elements (2; 103) aus einem Thermoplastmaterial, wobei das Element (2; 103) dafür geeignet ist, mindestens einen Teil der Komponente (1; 101) zu bilden, und eine Fläche (6; 106) aufweist, die so gestaltet ist, dass sie der nassen Farbe zugewandt ist,
Behandeln der Fläche (6; 106) mittels Korona-, Flamm- oder Plasmabehandlung, so dass ihre Oberflächenenergie erhöht wird,
Aufbringen eines strahlungshärtbaren Lacks, der unter frei-radikalisch UV-härtbaren Lacken, kationisch UV-härtbaren Lacken und EB-härtbaren Lacken ausgewählt ist, auf mindestens einen Abschnitt der Fläche (6; 106), und
Bestrahlen des strahlungshärtbaren Lacks, um den strahlungshärtbaren Lack zu härten und **dadurch** auf der Fläche (6; 106) eine Beschichtung (32; 132) zu bilden, die dafür geeignet ist, getrocknete Farbe (34) darauf festzuhalten.

2. Verfahren nach Anspruch 1, wobei der strahlungshärtbare Lack auf die Fläche (6; 106) mittels eines Prozesses aufgebracht wird, der ausgewählt ist unter: Offset-Druck, Tampondruck, Siebdruck, Flexodruck, Tintenstrahldruck, Farbauftrag mittels einer Rolle oder einer Bürste und Aufsprühen.

3. Verfahren nach einem der Ansprüche 1-2, wobei das Element ein Dünnfilm (103) ist, der, nachdem der strahlungshärtbare Lack auf die Fläche (106) aufgetragen und gehärtet wurde, um die Beschichtung (132) auf der Fläche (106) zu bilden, an einem thermoplastischen Substrat (105) befestigt wird, um die Komponente (101) zu bilden.

4. Verfahren nach einem der Ansprüche 1-3, wobei das Element ein dünner thermoplastischer Film (103) ist, der, nachdem der strahlungshärtbare Lack auf die Fläche (106) aufgetragen und gehärtet wurde, um die Beschichtung (132) auf der Fläche (106) zu bilden, in ein Formwerkzeug (108) eingebracht wird, und wobei schmelzflüssiges Thermoplastmaterial in das Formwerkzeug (108) an einer zweiten Fläche (116) des Dünnfilms (103) eingespritzt wird, wobei die zweite Fläche (116) der Fläche (106), auf der sich die Beschichtung (132) befindet, gegenüber liegt, um die Komponente (101) zu bilden.

5. Verfahren nach Anspruch 3, wobei das Element ein dünner thermoplastischer Film (203) ist, der auf einer zweiten Fläche (216) mit einer Klebeschicht (218) versehen ist, wobei sich die zweite Fläche (216) gegenüber der Fläche (206), die die Beschichtung (232) aufweist, befindet, um den Dünnfilm (203) an dem thermoplastischen Substrat zu befestigen.

6. Verfahren nach einem der Ansprüche 1-5, wobei die Komponente ein eimerförmiger Behälter (1) ist und das Härten des strahlungshärtbaren Lacks an einer Innenwand (2) des Behälters (1) bewerkstelligt wird, indem der eimerförmige Behälter (1) um seine Symmetrieachse (SA) gedreht wird, während eine Strahlungsquelle (14) zur horizontalen Ebene geneigt gehalten wird.

7. Verfahren nach einem der Ansprüche 1-5, wobei die Komponente ein eimerförmiger Behälter (1) ist und das Härten des strahlungshärtbaren Lacks an einer Innenwand (2) des Behälter (1) bewerkstelligt wird, indem eine Strahlungsquelle (24) mindestens teilweise im Inneren des eimerförmigen Behälters (1) angeordnet wird.

8. Verfahren nach einem der Ansprüche 1-7, wobei der Schritt des Behandelns der Fläche (6; 106) zur Erhöhung ihrer Oberflächenenergie vorzugsweise durch ein Verfahren, das unter Koronabehandlung, Plasmabehandlung und Flammbehandlung ausgewählt ist, ausgeführt wird, bis die Oberflächenenergie mindestens 38 mN/m (Dyn/cm) beträgt.

9. Komponente für eine Verpackung zum Aufbewahren flüssiger Farbe,
wobei die Komponente (1; 101) dafür geeignet ist, Farbe festzuhalten, die darauf getrocknet ist, und zu verhindern, dass die getrocknete Farbe (34) in die nasse Farbe (30) hineinfällt,
**dadurch gekennzeichnet, dass** die Komponente (1; 101) ein Substrat (2; 105) aus Thermoplastmaterial und eine Fläche (6; 106) umfasst, die so gestaltet ist, dass sie der nassen Farbe (30) zugewandt ist und mittels Korona-, Flamm- oder Plasmabehandlung behandelt ist, wobei die Fläche (6; 106) mindestens teilweise mit einer Beschichtung (32; 132) bedeckt ist, die durch einen strahlungsgehärteten strahlungshärtbaren Lack gebildet wird, der unter den frei-radikalisch UV-härtbaren Lacken, kationisch UV-härtbaren Lacken und EB-härtbaren Lacken ausgewählt ist.

10. Komponente nach Anspruch 9, wobei die Fläche (106) auf einem Dünnfilm (103) gebildet ist, der an dem Substrat (105) aus Thermoplastmaterial befestigt ist.

11. Komponente nach einem der Ansprüche 9-10, wobei die Beschichtung (32; 132) eine Dicke von 1-50 µm aufweist.

12. Komponente nach einem der Ansprüche 9-11, wobei die Komponente ein eimerförmiger Behälter (1) ist und die Beschichtung eine Innenwand (2) des Behälters (1) von einer Öffnung (12) des Behälters (1) bis hinab auf mindestens 65 % der Gesamthöhe (H) der Innenwand (2) bedeckt.

13. Komponente für eine Verpackung zum Aufbewahren flüssiger Farbe, wobei die Komponente (1; 101) dafür geeignet ist, Farbe festzuhalten, die darauf getrocknet ist, und zu verhindern, dass die getrocknete Farbe (34) in die nasse Farbe (30) hineinfällt,
**dadurch gekennzeichnet, dass** die Komponente ein Etikett (107; 207) umfasst, das an einer Wand (102) der Komponente (1; 101) angebracht ist, wobei diese Wand (102) so gestaltet ist, dass sie der nassen Farbe (30) zugewandt ist, wobei das Etikett (107, 207) einen dünnen thermoplastischen Film (103; 203) und eine Beschichtung (132; 232), die auf einer Fläche (106; 206) des Dünnfilms (103; 203) ausgebildet ist, umfasst, wobei die Fläche (106; 206) so gestaltet ist, dass sie der nassen Farbe (30) zugewandt ist und mittels Korona-, Flamm- oder Plasmabehandlung behandelt ist, wobei die Beschichtung (132; 232) dafür geeignet ist, die getrocknete Farbe (34) daran festzuhalten.

14. Komponente nach Anspruch 13, wobei die Komponente unter eimerförmigen Behältern (1) und Deckeln (101) ausgewählt ist.

## Revendications

1. Procédé de fabrication d'un composant d'un paquet pour stocker de la peinture fraîche, le composant étant adapté afin de fixer la peinture qui a séché sur celui-ci et empêcher la peinture sèche de tomber dans la peinture fraîche,
comprenant les étapes consistant à :
fabriquer un élément (2 ; 103) à partir d'un matériau thermoplastique, l'élément (2 ; 103) étant adapté afin de former au moins une partie du composant (1 ; 101) et ayant une surface (6 ; 106) adaptée afin de faire face à la peinture fraîche,
traiter ladite surface (6 ; 106) afin d'augmenter son énergie de surface au moyen d'un traitement corona, au plasma ou à la flamme,
appliquer une laque séchable sous rayonnement, qui est choisie parmi des laques séchables sous radiaux libres UV, des laques séchables sous UV cationiques et des laques séchables sous EB, sur au moins une portion de ladite surface (6 ; 106), et
exposer la laque séchable sous rayonnement à un rayonnement afin de sécher la laque séchable sous rayonnement de manière à former sur ladite surface (6 ; 106) un revêtement (32 ; 132) qui est approprié pour fixer la peinture sèche (34) sur celui-ci.

2. Procédé selon la revendication 1, dans lequel la laque séchable sous rayonnement est appliquée sur ladite surface (6 ; 106) au moyen d'un processus choisi parmi une : impression offset, impression au tampon, sérigraphie, impression flexographique, impression à jet d'encre, peinture au moyen d'un rouleau ou d'une brosse et application pulvérisée.

3. Procédé selon une quelconque des revendications 1-2, dans lequel ledit élément est un film mince (103), qui, après que la laque séchable sous rayonnement a été appliquée sur ladite surface (106) et séchée afin de former ledit revêtement (132) sur ladite surface (106), est fixé à un substrat thermoplastique (105) afin de former ledit composant (101).

4. Procédé selon une quelconque des revendications 1-3, dans lequel ledit élément est un film thermoplastique mince (103), qui, après que la laque séchable sous rayonnement a été appliquée sur ladite surface (106) et séchée afin de former ledit revêtement (132) sur ladite surface (106), est introduit dans un moule (108), et dans lequel le matériau thermoplastique fondu est injecté dans le moule (108) au niveau d'une seconde surface (116) du film mince (103), ladite seconde surface (116) étant opposée à ladite surface (106) ayant ledit revêtement (132), afin de former ledit composant (101).

5. Procédé selon la revendication 3, dans lequel ledit élément est un film thermoplastique mince (203) qui est pourvu d'une couche de colle (218) sur une seconde surface (216), ladite seconde surface (216) étant opposée à ladite surface (206) ayant ledit revêtement (232), afin de fixer le film mince (203) au substrat thermoplastique.

6. Procédé selon une quelconque des revendications 1-5, dans lequel ledit composant est un conteneur en forme de seau (1), le séchage de la laque séchable sous rayonnement étant accompli au niveau d'une paroi intérieure (2) du conteneur (1) en mettant en rotation le conteneur en forme de seau (1) autour de son axe de symétrie (SA) tout en gardant une source de rayonnement (14) inclinée au plan horizontal.

7. Procédé selon une quelconque des revendications 1-5, dans lequel ledit composant est un conteneur en forme de seau (1), le séchage de la laque séchable sous rayonnement étant accompli au niveau d'une paroi intérieure (2) du conteneur en situant une source de rayonnement (24) au moins partiellement à l'intérieur du conteneur en forme de seau (1).

8. Procédé selon une quelconque des revendications 1-7, dans lequel ladite étape de traitement de ladite surface (6 ; 106) afin d'augmenter son énergie de surface est exécutée jusqu'à ce que l'énergie de surface soit au moins 38 mN/m (Dynes/cm) de préférence par un procédé choisi parmi un traitement corona, un traitement au plasma et un traitement à la flamme.

9. Composant d'un paquet pour stocker de la peinture fraîche, le composant (1 ; 11) étant adapté afin de fixer la peinture qui a séché sur celui-ci et empêcher la peinture sèche (34) de tomber dans la peinture fraîche (30),
**caractérisé en ce que** ledit composant (1 ; 101) comprend un substrat (2 ; 105) de matériau thermoplastique et une surface (6 ; 106) étant adaptée afin de faire face à la peinture fraîche (30), et étant traité au moyen d'un traitement corona, au plasma ou à la flamme, ladite surface (6 ; 106) étant au moins partiellement recouverte d'un revêtement (32 ; 132) formé par une laque séchable sous rayonnement séchée sous rayonnement, qui est choisie parmi les laques séchables aux radicaux libres UV, laques séchables aux UV cationiques et laques séchables aux EB.

10. Composant selon la revendication 9, dans lequel ladite surface (106) est formée sur un film mince (103) étant fixé audit substrat (105) de matériau thermoplastique.

11. Composant selon une quelconque des revendications 9-10, dans lequel ledit revêtement (32 ; 132) a une épaisseur comprise entre 1 et 50 µm.

12. Composant selon une quelconque des revendications 9-11, dans lequel ledit composant est un conteneur en forme de seau (1), ledit revêtement recouvrant une paroi intérieure (2) du conteneur (1) depuis une ouverture (12) du conteneur (1) en allant vers le bas à au moins 65% de la hauteur totale (H) de la paroi intérieure (2).

13. Composant d'un paquet pour stocker de la peinture fraîche, le composant (1 ; 101) étant adapté afin de fixer de la peinture qui a séché sur celui-ci et empêcher la peinture sèche (34) de tomber dans la peinture fraîche (30),
**caractérisé en ce que** le composant comprend une étiquette (107 ; 207) étant fixée à une paroi (102) du composant (1 ; 101), laquelle paroi (102) est adaptée afin de faire face à la peinture fraîche (30), l'étiquette (107 ; 207) comprenant un film thermoplastique mince (103 ; 203) et un revêtement (132 ; 232) formé sur une surface (106 ; 206) du film mince (103 ; 203), ladite surface (106 ; 206) étant adaptée afin de faire face à la peinture fraîche (30) et étant traitée au moyen d'une traitement corona, au plasma ou à la flamme, le revêtement (132 ; 232) étant approprié afin de fixer la peinture sèche (34) sur celui-ci.

14. Composant selon la revendication 13, le composant étant choisi parmi des conteneurs en forme de seaux (1) et des couvercles (101).
